# EUROPEAN PATENT APPLICATION

(11) **EP 1 380 608 A1**
(43) Date of publication of application: **14.01.2004**
(21) Application number: 02710492.6
(22) Date of filing: 04.02.2002
(51) Int. Cl.: C08G 18/48, C08G 18/61

(54) **LOWLY AIR-PERMEABLE FLEXIBLE POLYURETHANE FOAM BLOCK AND PROCESS FOR PRODUCING THE SAME**

(30) Priority: 06.02.2001 JP 2001029775
(71) Applicant: Toyo Quality One Corporation, Chuo-ku, Tokyo 103-0022 (JP)
(72) Inventor: TANAKA, Takahiro, Kawagoe-shi, Saitama 350-0812 (JP)
(74) Representative: Grosse, Rainer, Dipl.-Ing.
(86) International application number: PCT/JP2002/000891
(87) International publication number: WO 2002/062865

(57) **Abstract**

A method of manufacturing a low air-permeability flexible polyurethane foam block through an employment of at least polyol, an isocyanate compound, a catalyst, a foaming agent and a foam stabilizer, the method being featured in that an open-cell flexible polyurethane foam block having an air-permeability of not more than 5cc/cm²/sec is enabled to be formed without accompanying an opening of the cells step called healthy bubble and without substantial variation of air-permeability.

## Description

### Technical Field

The present invention relates to a low air-permeability flexible polyurethane foam block, and to a method of manufacturing a low air-permeability flexible polyurethane foam block. In particular, the present invention relates to a low air-permeability flexible polyurethane foam block which is very low in air-permeability and substantially free from the variation of air-permeability throughout the entire body of the foam block, and to a method of manufacturing such a low air-permeability flexible polyurethane foam block.

### Background Art

As for the method of manufacturing a low air-permeability flexible polyurethane foam block that has been conventionally employed, there is known, for example, a method which is designed to leave the cell membrane of the foam as much as possible in the foam block. More specifically, this conventional method is featured in the employment of highly reactive polyol and isocyanate compounds, in the employment of a large quantity of a catalyst having a strong curing effect, or in the employment of a foam stabilizer having a strong foam-stabilizing effect.

As an alternative method, there is known a method which is designed to enhance the air-permeability resistance of cells by confining the cell size of the foam block as minimum as possible even if the foam block is constituted by an open-cell structure. More specifically, this conventional method is featured in the employment of a high-viscosity polyol such as polyester polyol, butadiene-based polyol, isoprene-based polyol, dimer acid-based polyol, etc.

There are problems however in the low air-permeability flexible polyurethane foam blocks which have been manufactured according to these conventional methods that if the air-permeability thereof is desired to be controlled to not higher than 5cc/cm²/sec, closed cells are more likely to be generated in the foam blocks, thereby rendering the resultant foam block very shrinkage and hence making it difficult to stably manufacture the foam blocks which are free from such a defective, and that the resultant foam block is always accompanied with variations in air-permeability which range from 2cc/cm²/sec to 15cc/cm²/sec depending on the specific regions of foam block, i.e. depending on the upper, middle and lower regions of the foam block, or depending on the sidewall and center portion of the foam block.

Therefore, the urethane foam having a desired air-permeability that can be actually obtained from the entire body of the urethane foam block as manufactured is confined to only a limited portion of the original urethane foam block, i.e. a lower portion or at middle and lower portions of the entire body of the urethane foam block as manufactured. Therefore, it is now desired to develop a method of manufacturing a low air-permeability flexible polyurethane foam block where the variation of air-permeability throughout the entire body thereof is confined to not more than 1cc/cm²/sec.

### Disclosure of Invention

The objects of the present invention is to provide a low air-permeability flexible polyurethane foam block which is very low in air-permeability and substantially free from the variation of air-permeability throughout the entire body of the foam block even if the foam block manufactured is bulky, and to provide a method of manufacturing such a low air-permeability flexible polyurethane foam block.

In order to achieve the aforementioned objects, there is provided, according to claim 1, a method of manufacturing a low air-permeability flexible polyurethane foam block, which involves the employment of at least polyol, an isocyanate compound, a catalyst, a foaming agent and a foam stabilizer, and which is featured in that an open-cell flexible polyurethane foam block having an air-permeability of not more than 5cc/cm²/sec is enabled to be formed without accompanying an opening of the cells step called healthy bubble.

The invention claimed in claim 2 is characterized in that in the aforementioned method, the foam stabilizer is formed of polysiloxane-polyoxyalkylene copolymer which is featured in that it is provided, at a terminal of polyoxyalkylene chain, with a functional group which is capable of chemically bonding to an isocyanate group, that the polyoxyalkylene chain has a number average molecular weight ranging from 150 to 1500, and that a weight ratio between ethylene oxide and propylene oxide in the polyoxyalkylene chain is in the range of 70/30 to 0/100.

The invention claimed in claim 3 is characterized in that in the aforementioned claim 2, the terminal of the polyoxyalkylene chain of the polysiloxane-polyoxyalkylene copolymer is constituted by hydroxyl group.

The invention claimed in claim 4 is characterized in that in any of the aforementioned claims 1 to 3, the polyol moiety is constituted by polyether polyol.

The invention claimed in claim 5 is characterized in that in any of the aforementioned claims 1 to 3, the polyol moiety is constituted by polyurethane prepolymer to be synthesized through a reaction between polyether polyol and isocyanate compound.

The invention claimed in claim 6 is characterized in that in any of the aforementioned claims 1 to 5, a hydrocarbon compound which is excellent in fluidity is further employed as an additive.

The low air-permeability flexible polyurethane foam block claimed in claim 7 is characterized in that it is formed through any of the aforementioned methods claimed in claims 1 to 6, and that it can be employed as a cushioning material, a sound absorbing material, an air-sealing material or a water sealing material.

### Best Mode for Carrying Out the Invention

The present inventor has considered that if an open-cell flexible polyurethane foam block can be manufactured without accompanying an opening of the cells step called healthy bubble, it may be possible to obtain an open-cell polyurethane foam block which is substantially free from variations in air-permeability throughout the entire body thereof. As a result of intensive studies, it has been found possible to achieve the aforementioned objects by adopting a manufacturing method which makes it possible to exclude an opening of the cells step called healthy bubble. More specifically, it has been found that when polysiloxane-polyoxyalkylene copolymer having a specific chemical structure is employed as a foam stabilizer, it is possible to manufacture, under relatively stable conditions, a flexible polyurethane foam block which is capable of overcoming the aforementioned problems, thereby accomplishing the present invention.

Next, the conventional opening of the cells step, namely the step of so-called healthy bubble, will be explained. According to the conventional method of manufacturing a flexible polyurethane foam block, polyol, an isocyanate compound, a foaming agent, and other essential components are mixed together to permit a polymerization reaction to be proceeded, thereby generating a gas. The gas generated from the reaction between the foaming agent or isocyanate and water is turned into fine bubbles to thereby form the urethane foam block, during which a step of destroying the membrane of cells in the urethane foam block is required to be taken place in order to enable the cells to intercommunicate with each other.

This step of destroying the membrane of cells is called "healthy bubble", "blow off" or "the opening cell". In this step, the gas pressure inside the foam is permitted to exceed over the strength of the cell membrane at the moment when the height of the foam being produced reaches maximum, thereby destroying the cell membrane and enabling the cells to be intercommunicated with each other, this high-pressure gas being subsequently permitted to be locally ejected out through the top surface of the foam block. This step of destroying the membrane of cells is indispensable in the manufacture of a flexible polyurethane foam block.

The term "healthy bubble" is employed in this specification denotes also a gas to be locally ejected at the moment when the height of the foam being produced reaches maximum. The circumstances regarding the healthy bubble are described in various authoritative publications related to urethane such as Saunders, J.H., Rubber Chem. Technol. 33, P1293-1322 (1960); Saunders, J.H. and K.C. Frisch, Polyurethane, Chemistry and Technology, Part 1, Chemistry, etc. This healthy bubble is always caused to generate on the occasion of manufacturing a flexible polyurethane foam block by persons skilled in the art. Namely, it is understood by artisans that this healthy bubble is one of indispensable open-cell-forming (intercommunicating) steps in the manufacture of a flexible polyurethane foam block. Thus, as represented by the term "healthy bubble", it has been considered for a long period of time that the conditions where the healthy bubble generates are assumed to be an optimum state in the manufacture of flexible polyurethane foam block.

As a matter of fact however, the foam block to be obtained in this manner is defective in that since the quantity of gas passing through the foam block increases gradually over the region extending from the middle portion up to the upper portion of the foam block, the air-permeability of this region becomes higher than the lower portion of the foam block. As a result, the foam block varying in air-permeability as a whole is caused to be produced. When a large quantity of a catalyst having a strong curing effect is employed, or when a raw material which is highly reactive is employed for the purpose of obtaining a low air-permeability foam block having an air-permeability of not more than 5cc/cm²/sec by making use of the conventional method, a resin-forming reaction is permitted to take place in preference to a gas-generating reaction, so that the generation of healthy bubble is suppressed and hence the cells in the foam block would become insufficient in the degree of intercommunication. Accordingly, due to the diffusion of gas that has been entrapped inside the foam block into air atmosphere, or due to the cooling of gas subsequent to the foaming process, the foam block is caused to greatly shrinkage, thereby raising a problem that it is difficult to manufacture a non-defective foam block.

Meanwhile, the structure of the conventional polysiloxane-polyoxyalkylene copolymer that has been generally employed as a foam stabilizer for flexible polyurethane foam is featured in that the number average molecular weight of polyoxyalkylene chain is in the range of 1000 to 5000, and that the weight ratio between ethylene oxide and propylene oxide is in the range of 60/40 to 40/60, the terminal of polyoxyalkylene chain thereof being optionally selected from hydroxyl group, methoxy group, etc.

As for the method of manufacturing a low air-permeability flexible polyurethane foam block in particular, there are known a method which is featured in that it employs polysiloxane-polyoxyalkylene copolymer comprising hydroxyl group as a terminal group of the polyoxyalkylene chain (Jpn. Pat. Appln. KOKOKU Publication No. 5-8211), and a method which is featured in that it employs polysiloxane-polyoxyalkylene copolymer comprising epoxy group as a terminal group of the polyoxyalkylene chain (Jpn. Pat. Appln. KOKAI Publication No. 8-92404). These conventional methods are intended to provide the polysiloxane-polyoxyalkylene copolymer with the function of cross-linking agent in addition to the function of foam stabilizer by the employment of the polyoxyalkylene chain having, as the terminal group thereof, a functional group which is capable of chemically bonding to isocyanate so as to minimize the degree of intercommunication of cells. However, since the number average molecular weight of polyoxyalkylene chain of this polysiloxane-polyoxyalkylene copolymer employed in these conventional manufacturing methods is in the range of 1000 to 5000, and still more, since an accompanying an opening of the cells step called healthy bubble, the variation of air-permeability inevitably occurs at a portion within a foam block.

That is so say, the method of manufacturing a low air-permeability flexible polyurethane foam block according to the present invention is characterized in that it involves the employment of at least polyol, an isocyanate compound, a catalyst, a foaming agent and a foam stabilizer, and that an open-cell flexible polyurethane foam block having an air-permeability of not more than 5cc/cm²/sec and being substantially free from foam block portion-dependent variation of air-permeability is enabled to be formed without accompanying an opening of the cells step called healthy bubble.

A first method for realizing an open-cell low air-permeability flexible polyurethane foam block without accompanying an opening of the cells step called healthy bubble according to the present invention is featured in that the time required for enabling the height of a foam block to reach maximum (i.e. rise time) is extended up to 5 to 10 minutes as compared with a period of 1 to 2 minutes which has been conventionally adopted. More specifically, this first method can be performed by reducing the quantity of catalyst, the quantity of water, the isocyanate index, etc. Further, a second method for realizing the polyurethane foam block without accompanying an opening of the cells step called healthy bubble is featured in that a specific kind of polysiloxane-polyoxyalkylene copolymer is employed as a foam stabilizer, thereby making it possible to manufacture the polyurethane foam block without decreasing the speed of production. The foam block produced in this manner is open-cell and substantially free from variation of air-permeability throughout the entire body thereof.

As for the foam stabilizer, it is possible to employ any kinds of polysiloxane-polyoxyalkylene copolymer as long as the copolymer satisfies the conditions that it is provided, at a terminal of polyoxyalkylene chain, with a functional group which is capable of chemically bonding to an isocyanate group, that the polyoxyalkylene chain has a number average molecular weight ranging from 150 to 1500, and that a weight ratio between ethylene oxide and propylene oxide in the polyoxyalkylene chain is in the range of 70/30 to 0/100. The typical structure of the polysiloxane-polyoxyalkylene copolymer can be represented by the following chemical formulas (1) and (2).

### Chemical formula (1):

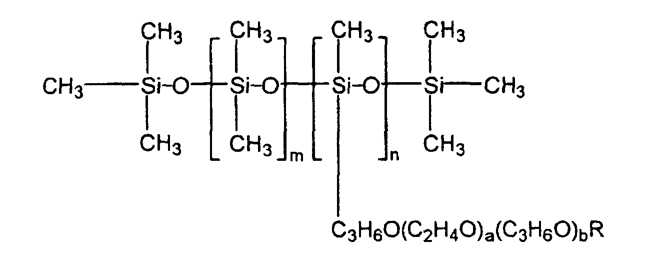

wherein R is a functional group which is capable of chemically bonding to an isocyanate group; and m, n, a and b are respectively an integer.

### Chemical formula (2):

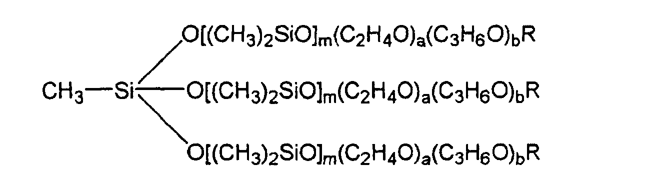

wherein R is a functional group which is capable of chemically bonding to an isocyanate group; and m, a and b are respectively an integer.

In the aforementioned polysiloxane-polyoxyalkylene copolymer, the weight ratio between ethylene oxide and propylene oxide in the polyoxyalkylene chain is within the range of 70/30 to 0/100, and more preferably, within the range of 30/70 to 0/100 in view of further minimizing the foam block portion-dependent variation of air-permeability.

Further, the number average molecular weight of the polyoxyalkylene chain in the aforementioned polysiloxane-polyoxyalkylene copolymer is within the range of 150 to 1500, and more preferably, within the range of 400 to 1000. If the number average molecular weight of the polyoxyalkylene chain is less than 150, the foam stabilizing effect thereof becomes too strong, thereby inviting the shrinkage of foam block. On the other hand, if the number average molecular weight of the polyoxyalkylene chain exceeds over 1500, the foam stabilizing effect thereof becomes too weak, thereby inviting the collapse of the cells and hence the forming of the foam block itself would become difficult. In particular, if the number average molecular weight of the polyoxyalkylene chain exceeds over 2000, the foam stabilizing effect thereof becomes too strong conversely, thereby inviting the shrinkage of foam block. Even if it may be possible, through the adjustment of the quantity of catalyst, etc., to obtain a foam block which is free from shrinkage and excellent in external configuration, the variations of air-permeability would be undesirably generated in the resultant foam block due to the involvement of an opening of the cells step called healthy bubble.

As for the terminal group of the polyoxyalkylene chain that can be chemically bonded to the isocyanate group in the polysiloxane-polyoxyalkylene copolymer, it may be selected from hydroxyl group, carboxyl group, amino group and epoxy group. However, in view of the easiness in chemical bonding to isocyanate group as well as the easiness in developing cross-linking effects, the employment of hydroxyl group is more preferable. If the terminal group of the polyoxyalkylene chain is constituted by a hydrocarbon group such as alkyl, phenyl, alkylphenyl, naphthyl or cyclohexyl, which is incapable of chemically bonding to the isocyanate group, the foam stabilizing effect thereof would become so weak that the cells would be collapsed, thereby making it difficult to form the foam block itself. Even if it is possible, in this case, to form the foam block, a great magnitude of variation in air-permeability would be caused to generate in the resultant foam block.

Further, in the conventional manufacturing method of a low air-permeability flexible polyurethane foam block by making use of a polyol which is highly viscous and excellent in foam-stabilizing capacity, a method is sometimes adopted wherein a rigid polyurethane foam stabilizer, which is relatively small in number average molecular weight of polyoxyalkylene chain and weak in surface active effect, is employed. This method is well known in the art. In the structure of polysiloxane-polyoxyalkylene copolymer that has been generally employed as a rigid polyurethane foam stabilizer according to the prior art, the kind of the terminal group of polyoxyalkylene chain is optional. Further, according to the prior art, the number average molecular weight of polyoxyalkylene chain ranges from 300 to 3000, and the weight ratio between ethylene oxide and propylene oxide in the polyoxyalkylene chain is in the range of 100/0 to 70/30.

Even in the present invention, the polysiloxane-polyoxyalkylene copolymer to be employed for manufacturing the urethane foam block without deteriorating the rate of production is featured in that the polyoxyalkylene chain thereof is prerequisitely required to have, as a terminal group thereof, a functional group which is capable of chemically bonding to isocyanate group. However, the features of the foam stabilizer according to the present invention differ prominently from the conventional polyurethane foam stabilizer in the following two aspects.

Firstly, the number average molecular weight of polyoxyalkylene chain in the polysiloxane-polyoxyalkylene copolymer is very small, i.e. in the range of 150 to 1500. Secondly, an optimum weight ratio between ethylene oxide and propylene oxide in the polyoxyalkylene chain is in the range of 30/70 to 0/100, i.e. the content of propylene oxide is made larger. Namely, the foam stabilizer according to the present invention quite differs in structure from the scope of the conventional foam stabilizer, and the aforementioned optimum weight ratio according to the present invention falls outside the scope of the foam stabilizer which has been considered by the artisan as having foam stabilizing effects. Due to the selection of these specific kinds of the terminal group of polyoxyalkylene chain, to the selection of the specific weight ratio between ethylene oxide and propylene oxide, and to the selection of the specific number average molecular weight as described above, it is now possible to obtain a sufficient foam stabilizing effect to enable a foam block to be formed, and to produce a very low air-permeability flexible polyurethane foam block which is substantially free from variations of air-permeability throughout the entire body of the foam block without accompanying an opening of the cells step called healthy bubble and also without decreasing the rate of production. By the way, the smaller the content of ethylene oxide in the polyoxyalkylene chain is, the finer will be the structure of cells that can be obtained.

For the purpose of manufacturing the foam block without decreasing the rate of production, one or two or more kinds of foam stabilizer each falling within a preferable range thereof (the scope of claim 2) may be simultaneously employed. If a foam stabilizer which falls outside the aforementioned preferable range is concurrently used together with the foam stabilizer falling within the aforementioned preferable range, the effect of the latter foam stabilizer would not be sufficiently realized.

For producing flexible polyurethane foam block without accompanying an opening of the cells step called healthy bubble and also without decreasing the rate of production, the quantity of the polysiloxane-polyoxyalkylene copolymer to be employed as a foam stabilizer should be at least 0.3 part by weight per 100 parts by weight of polyol moiety. Although there is not any particular limitation with regard to the upper limit of the quantity of the polysiloxane-polyoxyalkylene copolymer, it is more preferable to limit the quantity of the polysiloxane-polyoxyalkylene copolymer to the range of 0.3 to 8 parts by weight, most preferably, 0.5 to 5 parts by weight. If the content of foam stabilizer is less than 0.3 part by weight, it becomes impossible to obtain a sufficient foam stabilizing effect, to form the foam block, and to prevent the cells from becoming larger in size even if the foam block can be formed.

As for the polyol to be employed in the present invention, there is not any particular limitation, and hence any kind of polyol which is generally employed in the manufacture of flexible polyurethane foam block can be employed. For example, it is possible to employ polyether polyol, polyester polyol, dimmer acid-based polyol, polycarbonate polyol, butadiene-based polyol, castor oil-based polyol, etc. These polyols may be employed singly or in combination of two or more kinds. Among these polyols, it is more preferable to employ polyether polyol, in particular, a kind of polyether polyol wherein the content of ethylene oxide is relatively small for the purpose of obtaining finer cells.

In the method of manufacturing a flexible polyurethane foam block according to the present invention, it is especially preferable, for the purposes of further miniaturizing the cells and further reducing the air-permeability, to adopt a method wherein polyurethane prepolymer consisting of polyether polyol as a polyol moiety and an isocyanate compound and having hydroxyl group as a terminal group is employed.

The polyol to be employed in the polyurethane prepolymer should preferably be selected from polyether polyol having a molecular weight ranging from 300 to 10000, more preferably from 3000 to 5000. As for the isocyanate compound, there is not any particular limitation unless it gives rise to difficulties, due to viscosity, in the preparation of a polyurethane prepolymer. For example, tolylenediisocyanate can be effectively employed, a preferable range of the viscosity thereof at 30°C being 1500cp-20000cp, more preferably 3000cp-10000cp.

Although there is not any particular limitation with regard to the composition ratio of aforementioned polyurethane prepolymer, a preferable ratio between polyether polyol and isocyanate compound would be 2 moles/1 mole, more preferably 3 moles/2 moles.

As for the isocyanate compound to be employed in the present invention, there is not any particular limitation, and hence any kind of isocyanate compound which is generally employed in the manufacture of flexible polyurethane foam block can be employed. For example, an aromatic isocyanate compound such as diphenylmethane diisocyanate, tolylenediisocyanate, hexamethylene diisocyanate, isophoron diisocyanate, dicyclohexylmethane-4,4'-diisocyanate and tetramethyl xylylene diisocyanate; an aliphatic isocyanate compound or an aromatic ring-based isocyanate compound can be employed singly or in combination of two or more kinds. Among these isocyanate compounds, tolylenediisocyanate is most preferable for use.

As for the catalyst to be employed in the present invention, there is any particular limitation and hence tertiary amines and organometallic compounds; which are generally employed in the manufacture of flexible polyurethane foam block, can be employed. As for the tertiary amines, specific examples thereof include bis(2,2'-dimethylamino) ethylether, trimethyl amine, triethyl amine, N-methyl morpholine, N-ethyl morpholine, N,N-dimethyl benzyl amine, N,N,N',N'-tetramethyl-1,3-butadiene amine, triethanol amine, 1,4-dihexamethylene tetraamine, pyridine oxide, etc. As for the organometallic compounds, specific examples thereof include dibutyltin dilaurate, dibutyltin diacetate, dioctyltin diacetate, etc.

As for the foaming agent to be employed in the present invention, there is not any particular limitation, and hence any kinds of foaming agent which are generally employed in the manufacture of flexible polyurethane foam block can be employed. For example, water, pentane, hexane, cyclopentane, cyclohexane, methylene chloride, HFC, HFA, etc. can be employed.

It is possible, in the manufacture of a flexible polyurethane foam block according to the present invention, to employ known additives which have been conventionally employed. For example, a flame retardant, an ultraviolet absorbing agent, an antioxidant, an antistatic agent, a filler, etc. can be employed at a suitable amount.

When a substance excellent in fluidity, mainly a hydrocarbon compound, is employed in the manufacture of a flexible polyurethane foam block of the present invention, a low air-permeability flexible polyurethane foam block which is excellent in physical durability can be obtained. More specifically, the low air-permeability flexible polyurethane foam block that has been obtained through the addition of such a substance, i.e. mainly a hydrocarbon compound, has been found as having such features that there is little variation in air-permeability before and after the crushing (fracture of cell membranes by means of physical compression) of the foam block. Although the reason for this is not clear, it is assumed that owing to the plasticizing effect of the hydrocarbon compound to the polyurethane resin, the fracture of cell membranes due to the crushing is suppressed to a minimum degree.

As for the aforementioned hydrocarbon compound, it is possible to employ rosin-based resin, terpene-based resin, aliphatic hydrocarbon resin, aromatic hydrocarbon resin, alicyclic hydrocarbon resin, liquid paraffin, polybutene, low molecular weight isoprene, oil, wax, long chain fatty esters, etc. These hydrocarbon compounds can be employed singly or in combination of two or more kinds and at a ratio of 3 to 80 parts by weight, more preferably 10 to 40 parts by weight per 100 parts by weight of the polyol moiety. If the content of the hydrocarbon compound is less than 3 parts by weight, it would be impossible to expect a sufficient plasticizing effect. On the other hand, if the content of the hydrocarbon compound exceeds over 80 parts by weight, it would become difficult to form the foam block itself.

The flexible polyurethane foam block to be obtained according to the present invention is very low air-permeability and substantially free from the variation of air-permeability throughout the entire body of the foam block, and the air-permeability thereof is not more than 5cc/cm²/sec, so that it can be employed as a cushioning material, a sound absorbing material or an air-sealing material and also as a water sealing material. Additionally, since the flexible polyurethane foam block containing the aforementioned hydrocarbon compound is excellent in physical durability and is enhanced in water-repellency, the flexible polyurethane foam block is expected to exhibit higher water-sealing properties.

As described above, the low air-permeability flexible polyurethane foam block according to the present invention is featured in that the cells thereof are sufficiently intercommunicated with each other to such an extent that the foam block is substantially free from shrinkage without accompanying an opening of the cells step called healthy bubble, and that the foam block is substantially free from the variation of air-permeability throughout the entire body of the foam block. Although the exact reasons for these phenomena are not yet made clear, they may be assumably explained as follows.

When the gas generated through a reaction is entrapped inside the foam until the foaming process is finished, and then, the gas is permitted to eject out of the cells at a stroke by way of the step called healthy bubble so as to enable the cells to intercommunicate with each other as in the case of the prior art, the quantity of gas passing through the region of foam block extending from the middle portion to the upper portion thereof increases gradually, whereby the openings to be formed in the cell membranes would become proportionally larger, thus resulting in the enhancement of air-permeability as compared with other lower portions and hence generating variations in air-permeability in the foam block.

Whereas, according to the manufacturing method as defined by the present invention, the intercommunication of the cells is permitted to initiate before the height of foam block reaches the maximum and still more, at a relatively early stage of reaction, thereby allowing a portion of the gas generated from the reaction to gradually diffuse into air atmosphere from the entire top surface of the foam block. Therefore, it is possible to alleviate the generation of excessive gas pressure inside the foam block and also to alleviate the local concentration of gas in a particular region of the foam block. As a result, the cells inside the foam block can be intercommunicated with each other without accompanying an opening of the cells step called healthy bubble, and at the same time, the generation of the variations in air-permeability in the foam block can be prevented.

The relationship between the number average molecular weight of the polyoxyalkylene chain and the foam-stabilizing effect thereof in a preferable foam stabilizer of the present invention will be explained as follows.

Generally, as the number average molecular weight of the polyoxyalkylene chain increases, the surface active effect of the foam stabilizer is enhanced proportionately, thus exhibiting a strong foam-stabilizing effect. Namely, according to the prior art, a foam stabilizer which is higher in surface active effect and stronger in foam-stabilizing effect has been selected as a foam stabilizer for a flexible polyurethane foam. Whereas, the polysiloxane-polyoxyalkylene copolymer to be employed in the present invention is much lower in surface active effect and weaker in foam-stabilizing effect due to a relatively small molecular weight of the polyoxyalkylene chain. However, due to the cross-linking effect to be obtained from the chemical bonding of the terminal group, the copolymer is enabled to function as a foam stabilizer. Therefore, as the number average molecular weight of the polyoxyalkylene chain becomes smaller, the ratio of the functional groups that can be chemically bonded to the isocyanate group per mole of the polysiloxane-polyoxyalkylene copolymer will be increased, thereby enhancing the reactivity of the copolymer and hence enabling the copolymer to exhibit a stronger foam-stabilizing effect. Although this foam-stabilizing effect becomes weaker as the number average molecular weight of the polyoxyalkylene chain becomes larger, when this number average molecular weight exceeds over the point where the foam-stabilizing effect is minimum, the surface active effect of the polyoxyalkylene chain is turned to increase gradually, thereby enabling the foam-stabilizing effect to become stronger again.

In the followings, the present invention will be further explained more in detail. However, it should be understood that the present invention is not confined to the following examples.

### (1) Components employed in Examples and Comparative Examples:

### a) Polyol

P-1: Polyether polyol having a molecular weight of 3000, which was obtained through an addition polymerization reaction between glycerin and propylene oxide. Hydroxyl number = 56

### b) Isocyanate compound

TDI: "Cholonate T-80" (tradename; Nippon Polyurethane Industries Co. Ltd.) (a mixture consisting of 80% by weight of 2,4-tolylenediisocyanate and 20% by weight of 2,6-tolylenediisocyanate).

### c) Polyurethane prepolymer

P-2: Polyurethane prepolymer (viscosity at 30°C = 3700cp, and hydroxyl number = 36.3) having a terminal hydroxyl group, which was synthesized by permitting a mixed solution of P-1/TDI (2 moles/1 mole) to react with each other for 2 hours at a temperature of 80°C in the presence of a metallic catalyst.

### d) Catalysts

Catalyst-1: "DABCO-33LV" (tradename; Sankyo Air Products Co. Ltd.) (a 33% dipropylene glycol solution of triethylene diamine).

Catalyst-2: "Neostan U-28" (tradename; Nitto Kasei Co. Ltd.) (stannous dioctoate).

### e) Foam stabilizer

Foam stabilizer-1: Polydimethyl siloxane-polyoxyalkylene copolymer having the structure of the aforementioned chemical formula (1), wherein the weight ratio of ethylene oxide/propylene oxide in the polyoxyalkylene chain = 0/100; R = H; and Mw = 600.

Foam stabilizer-2: Polydimethyl siloxane-polyoxyalkylene copolymer having the structure of the aforementioned chemical formula (1), wherein the weight ratio of ethylene oxide/propylene oxide in the polyoxyalkylene chain = 30/70; R = H; and Mw = 600.

Foam stabilizer-3: Polydimethyl siloxane-polyoxyalkylene copolymer having the structure of the aforementioned chemical formula (1), wherein the weight ratio of ethylene oxide/propylene oxide in the polyoxyalkylene chain = 70/30; R = H; and Mw = 600.

Foam stabilizer-4: Polydimethyl siloxane-polyoxyalkylene copolymer having the structure of the aforementioned chemical formula (2), wherein the weight ratio of ethylene oxide/propylene oxide in the polyoxyalkylene chain = 0/100; R = H; and Mw = 1300.

Foam stabilizer-5: Polydimethyl siloxane-polyoxyalkylene copolymer having the structure of the aforementioned chemical formula (1), wherein the weight ratio of ethylene oxide/propylene oxide in the polyoxyalkylene chain = 100/0; R = H; and Mw = 600.

Foam stabilizer-6: Polydimethyl siloxane-polyoxyalkylene copolymer having the structure of the aforementioned chemical formula (1), wherein the weight ratio of ethylene oxide/propylene oxide in the polyoxyalkylene chain = 100/0; R = CH₃; and Mw = 600.

Foam stabilizer-7: Polydimethyl siloxane-polyoxyalkylene copolymer having the structure of the aforementioned chemical formula (1), wherein the weight ratio of ethylene oxide/propylene oxide in the polyoxyalkylene chain = 40/60; R = H; and Mw = 2100.

### f) Hydrocarbon compounds excellent in fluidity

Additive-1: "Highsol SAS-LH" (tradename; Nippon Petrochemical Co. Ltd.) (an aromatic hydrocarbon compound).

Additive-2: "PW-380" (tradename; Idemitsu Kosan Co. Ltd.) (paraffinic process oil).

### (2) Explanations on Examples and Comparative Examples:

Example 1 represents one embodiment wherein polyether polyol (P-1) was employed as a polyol moiety.

Example 2 represents one embodiment wherein polyurethane prepolymer (P-2) was employed as a polyol moiety.

Example 3 represents one embodiment wherein hydrocarbon compounds excellent in fluidity (Additives 1 and 2) were employed as an additive.

Examples 4 and 5 represent embodiments wherein polydimethyl siloxane-polyoxyalkylene copolymers where the weight ratio between ethylene oxide and propylene oxide differs from those of Examples 1 to 3 were employed as a foam stabilizer.

Example 6 represents one embodiment wherein a polydimethyl siloxane-polyoxyalkylene copolymer (foam stabilizer-4) differing in structure from those of Examples 1 to 5 was employed as a foam stabilizer.

Example 7 represents one embodiment wherein a polydimethyl siloxane-polyoxyalkylene copolymer (foam stabilizer-7) which was commonly employed as a foam stabilizer for flexible polyurethane foam was employed so as to reduce the quantity of catalyst, thereby extremely retarding the rise time.

Example 8 represents one embodiment wherein the quantity of water was increased so as to lower the density of foam block.

Comparative Example 1 represents one embodiment wherein a polydimethyl siloxane-polyoxyalkylene copolymer (foam stabilizer-5) which was generally employed as a foam stabilizer for rigid polyurethane foam was employed as a foam stabilizer.

Comparative Example 2 represents one embodiment wherein a polydimethyl siloxane-polyoxyalkylene copolymer (foam stabilizer-6) having a structure where the terminal group of the polyoxyalkylene chain thereof was incapable of chemically bonding to isocyanate group was employed.

Comparative Example 3 represents one embodiment wherein a polydimethyl siloxane-polyoxyalkylene copolymer (foam stabilizer-7) which was commonly employed as a foam stabilizer for flexible polyurethane foam was employed as a foam stabilizer.

The compositions and physical properties of foams of Examples 1 to 8 are shown in the following Table 1. The compositions and physical properties of foams of Comparative Examples 1 to 3 are shown in the following Table 2. By the way, all of the numerical values in these Tables 1 and 2 represent weight parts on the basis of the weight of polyol moiety which is set to 100 parts by weight.

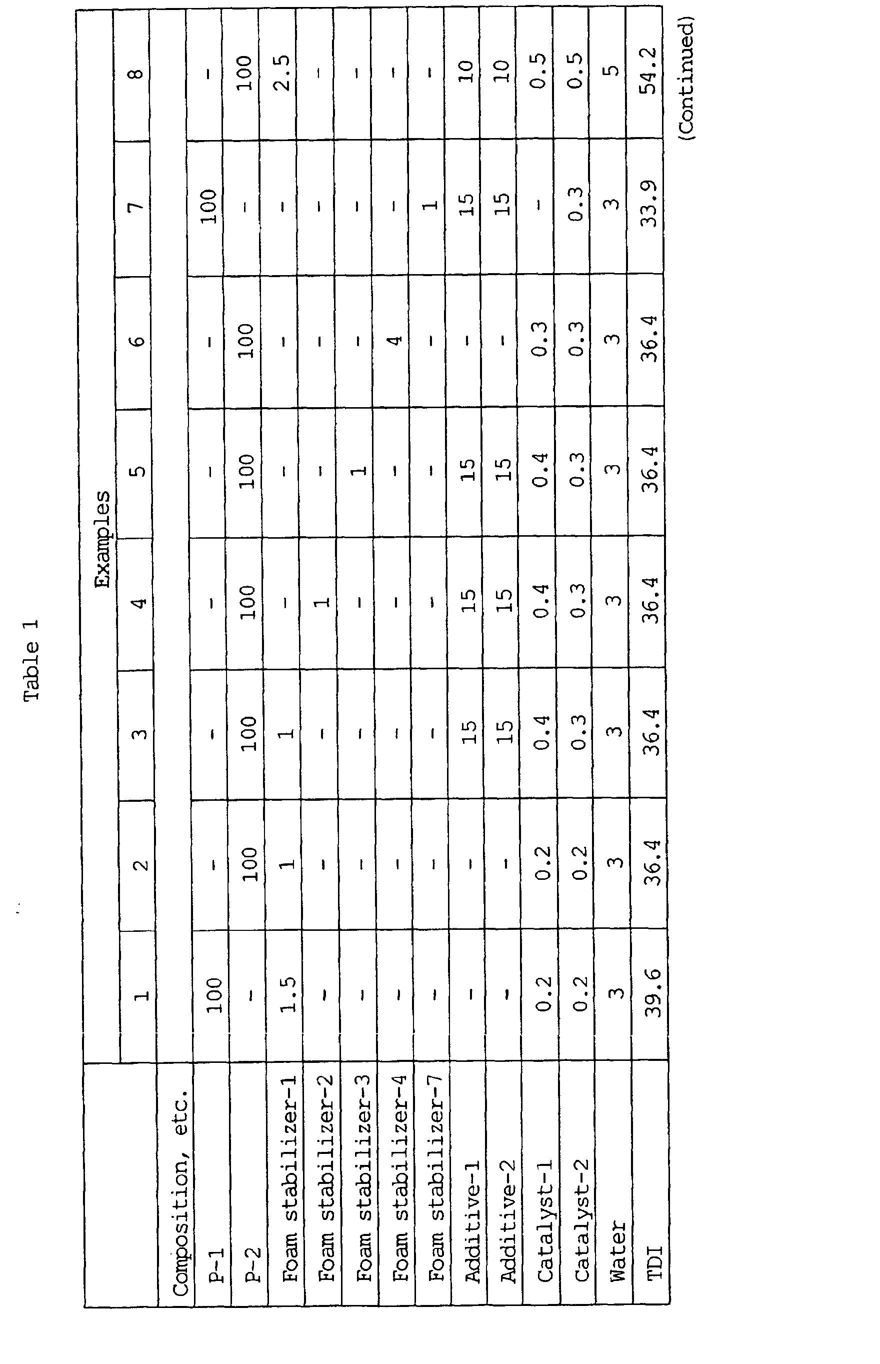

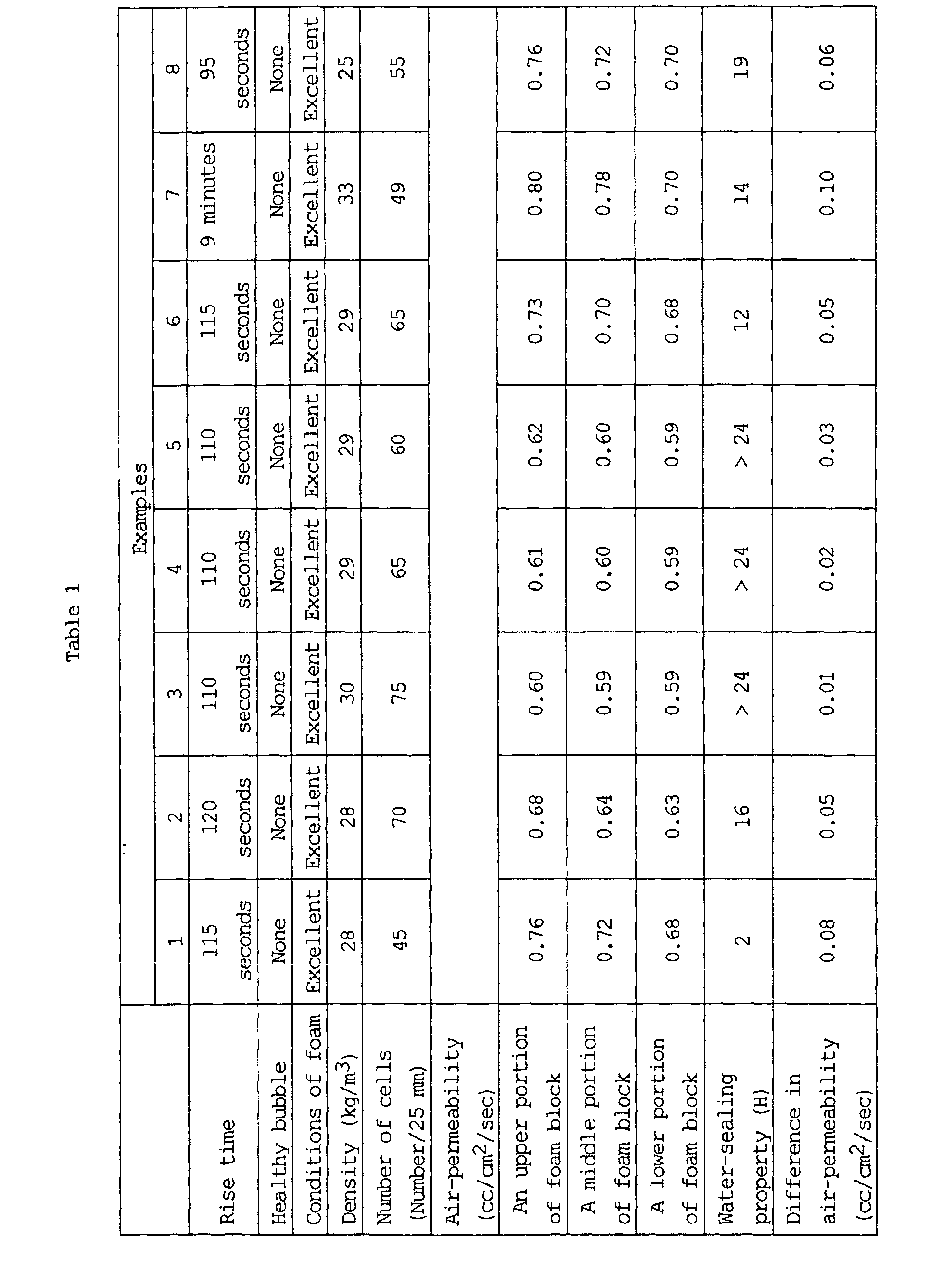

**Table 2**

| | Comparative Examples | | |
|---|---|---|---|
| | 1 | 2 | 3 |
| Composition, etc. | | | |
| P-2 | 100 | 100 | 100 |
| Foam stabilizer-5 | 1.0 | - | - |
| Fo am stabilizer-6 | - | 1.0 | - |
| Foam stabilizer-7 | - | - | 1.0 |
| Additive-1 | 15 | 15 | 15 |
| Additive-2 | 15 | 15 | 15 |
| Catalyst-1 | 0.4 | 0.4 | 0.4 |
| Catalyst-2 | 0.3 | 0.3 | 0.3 |
| Water | 3.0 | 3.0 | 3.0 |
| TDI | 36.4 | 36.4 | 36.4 |
| Rise time | 110 seconds | - | 105 seconds |
| Healthy bubble | Slightly found | - | Found oun |
| Conditions of foam | Roughened Collapsed cells | - | Excellent |
| Density (kg/m³) | 30 | - | 31 |
| Number of cells (Number/25 mm) | 35 | - | 60 |
| Air-permeability (cc/cm²/sec) | | | |
| An upper portion of foam block | 12.3 | - | 9.6 |
| A middle portion of foam block | 8.0 | - | 5.4 |
| A lower portion of foam block | 1.7 | - | 2.3 |
| Water-sealing property (H) | 0.5 | - | 1.5 |
| Difference in air-permeability (cc/cm²/sec) | 10.6 | - | 7.3 |

### (3) Methods of evaluating the physical properties, etc.:

The density, the number of cells, the air-permeability and the water-sealing property of the polyurethane foams obtained from each of Examples and Comparative Examples were measured according to the following methods.
* Density: Measured based on JIS K 6400
* The number of cells: The number of cells per 25 mm
* Air-permeability: The permeability of the urethane foam samples each having a thickness of 10 mm was measured on the basis of JIS K 6400 Permeability A method. By the way, the samples of the urethane foam were collected from three regions of the foam block having a height of about 700 mm, i.e. an upper region, a middle region and a lower region of the foam block.
* The difference in air-permeability: (A maximum value - a minimum value)
* The water-sealing property: An urethane foam sample having a width of 10 mm and a thickness of 10 mm, which was punched out in a U-shape from an upper portion of the foam block was sandwiched between a couple of acrylic resin plates so as to compress the sample at a compressibility of 50%, after which the sample was erected perpendicularly. Then, distilled water was poured through a gap between the acrylic resin plates into the space inside the U-shaped urethane foam block until the level of water reached to a height of 50 mm, and the urethane foam block was left to stand. Then, the time (H) required for the distilled water to exude from the bottom of the U-shaped urethane foam sample was measured, thus defining this time as the water-sealing property of the urethane foam sample.

Further, when the ratio of open-cell of the foam obtained from each of Examples was measured according to ASTM-D-2856-70 method, all of the samples were found 100%, thus confirming that all of the samples were formed of open-cell flexible polyurethane foam.

It would be clear from the above Tables 1 and 2 that all of the foam blocks that had been manufactured by a method without accompanying an opening of the cells step called healthy bubble were found substantially free from the variation of air-permeability throughout the entire body of the foam block. Moreover, as apparent from these Tables 1 and 2, all of the foam blocks exhibited a very excellent water-sealing property. Further, when a polysiloxane-polyoxyalkylene copolymer which was deemed preferable according to the present invention was employed as a foam stabilizer for flexible polyurethane foam, it was found possible to extremely lower the air-permeability of foam as compared with the case where a conventional foam stabilizer was employed, and at the same time, the foam could be manufactured with the rise time thereof being confined to 1 to 2 minutes, thus not deteriorating the rate of production.

As explained above in detail, it is possible according to the present invention to provide an open-cell low air-permeability flexible polyurethane foam block which is very low in air-permeability and substantially free from the variation of air-permeability throughout the entire body of the foam block even if the foam block manufactured is bulky, and to provide a method of manufacturing such an open-cell low air-permeability flexible polyurethane foam block.

## Claims

1. A method of manufacturing a low air-permeability flexible polyurethane foam block through an employment of at least polyol, an isocyanate compound, a catalyst, a foaming agent and a foam stabilizer; said method being featured in that:
an open-cell flexible polyurethane foam block having an air-permeability of not more than 5cc/cm²/sec is enabled to be formed without accompanying an opening of the cells step called healthy bubble.

2. The method of manufacturing a low air-permeability flexible polyurethane foam block according to claim 1, **characterized in that** said foam stabilizer is formed of polysiloxane-polyoxyalkylene copolymer which is featured **in that** it is provided, at a terminal of polyoxyalkylene chain, with a functional group which is capable of chemically bonding to an isocyanate group, that said polyoxyalkylene chain has a number average molecular weight ranging from 150 to 1500, and that a weight ratio between ethylene oxide and propylene oxide in said polyoxyalkylene chain is in the range of 70/30 to 0/100.

3. The method of manufacturing a low air-permeability flexible polyurethane foam block according to claim 2, **characterized in that** a terminal of said polyoxyalkylene chain of the polysiloxane-polyoxyalkylene copolymer is constituted by hydroxyl group.

4. The method of manufacturing a low air-permeability flexible polyurethane foam block according to claims 1 to 3, **characterized in that** the polyol moiety is constituted by polyether polyol.

5. The method of manufacturing a low air-permeability flexible polyurethane foam block according to claims 1 to 3, **characterized in that** the polyol moiety is constituted by polyurethane prepolymer to be synthesized through a reaction between polyether polyol and isocyanate compound.

6. The method of manufacturing a low air-permeability flexible polyurethane foam block according to claims 1 to 5, **characterized in that** a hydrocarbon compound which is excellent in fluidity is further employed as an additive.

7. A low air-permeability flexible polyurethane foam block which is formed through any one of the methods claimed in claims 1 to 6, said flexible polyurethane foam block being useful as a cushioning material, a sound absorbing material, an air-sealing material or a water sealing material.
